# EUROPÄISCHE PATENTSCHRIFT

(11) **EP 1 460 502 B1**
(45) Veröffentlichungstag und Bekanntmachung des Hinweises auf die Patenterteilung: **15.08.2007**
(21) Anmeldenummer: 04006211.9
(22) Anmeldetag: 16.03.2004
(51) Int. Cl.: G05B 19/418

(54) **Verfahren zum Betrieb einer Steuerung an einem Kommunikationsmedium**
Method for operating control device of a communication medium
Procédé de fonctionnement d'un controleur d'un support de communication

(30) Priorität: 21.03.2003 DE 10312756
(43) Veröffentlichungstag der Anmeldung: 22.09.2004
(73) Patentinhaber: Focke & Co. (GmbH & Co. KG), 27283 Verden (DE)
(72) Erfinder: Focke, Heinz, 27283 Verden (DE); Olbrich, Hartmut, 27283 Verden (DE); Breitenstein, Christian, 28213 Bremen (DE); Tengen, Thomas, 27283 Verden (DE)
(74) Vertreter: Bolte, Erich

(56) Entgegenhaltungen:
- WO-A-97/49028

## Beschreibung

Die vorliegende Erfindung betrifft ein Verfahren zum Betrieb einer Vorrichtung zur Steuerung und/oder Überwachung einer Produktions- und/oder Verpackungsanlage, insbesondere einer Anlage zur Produktion und/oder Verpackung von Zigaretten, Zigarren und dergleichen an einem Kommunikationsmedium, z.B. einem Bus. Die genannte Vorrichtung wird im Folgenden kurz als Steuerung bezeichnet. Die Erfindung betrifft ferner eine solche Vorrichtung, also eine solche Steuerung. Die Steuerung umfasst eine Schnittstelle zum Anschluss an das Kommunikationsmedium, einen Hauptspeicher zum Ablegen eines Steuerungsprogramms, nach dessen Maßgabe die Steuerung und/oder Überwachung der Produktions- und/oder Verpackungsanlage erfolgt sowie Mittel zum Ausführen des Steuerungsprogramms.

Derartige Steuerungen sind allgemein bekannt und in vielfältiger Konfiguration bei der Automatisierung technischer Prozesse im Einsatz.

Beim Austausch solcher Steuerungen, etwa im Servicefall, ist nachteilig bisher eine Neukonfiguration der Steuerung erforderlich.

Aus der WO 97/49028 ist bekannt, das Steurungsprogramm einer Steuerung vollständig auf einem entfernbaren Speicher abzulegen. Nachteilig dabei ist, dass der Speicher groß sein muss, weshalb er schlecht zu verwalten ist.

Die Aufgabe der Erfindung besteht damit darin, ein Verfahren zum Betrieb einer Steuerung anzugeben, mit dem der Austausch von Steuerungen und der nachfolgende Wiederanlauf der Steuerung erleichtert wird. Eine weitere Aufgabe der Erfindung besteht darin, eine Steuerung, mit der das Verfahren durchgeführt werden kann, anzugeben.

Die Aufgabe wird mit einem Verfahren mit den Merkmalen des Anspruchs 1 sowie mit einer Vorrichtung mit den Merkmalen des Anspruchs 9 gelöst. Danach ist bei einem Verfahren zum Betrieb einer Steuerung der oben genannten Art vorgesehen, dass in einem entfernbaren Speichermodul Konfigurationsdaten abgelegt sind, dass bei einem Wiederanlauf der Steuerung die Konfigurationsdaten ausgelesen werden und dass anhand der Konfigurationsdaten ein Zugriff auf einen über das Kommunikationsmedium erreichbaren entfernten Speicher erfolgt, der einen Transfer von auf dem entfernten Speicher hinterlegten Daten auf die Steuerung umfasst.

Eine Besonderheit des erfindungsgemäßen Verfahrens besteht darin, dass das Auslesen der Konfigurationsdaten von einem im Hauptspeicher der Steuerung gespeicherten Installationsprogramm ausgelöst wird und dass das Installationsprogramm mit dem Transfer der Daten, nämlich einer auf dem entfernten Speicher hinterlegten Kopie des Steuerungsprogramms, im Hauptspeicher der Steuerung überschrieben wird.

Eine weitere Besonderheit der Erfindung besteht darin, dass eine Mehrzahl von Kopien des Steuerungsprogramms auf dem oder mehreren entfernten Speichern hinterlegt ist und dass beim Wiederanlauf der Steuerung auf die letzte Kopie des Steuerprogramms zugegriffen wird.

Schließlich besteht eine Besonderheit der Erfindung darin, dass die Konfigurationsdaten Maschinendaten hinsichtlich einer Maschine, für die das Steuerungsprogramm vorgesehen ist, umfassen und dass vor oder mit dem Start des Steuerungsprogramms ein Vergleich der Maschinendaten mit eingelesenen Maschinenkennungen erfolgt und dass das Steuerungsprogramm nur bei zu den Maschinendaten passenden Maschinenkennungen ausgeführt wird.

Weitere Besonderheiten der Erfindung werden nachfolgend anhand der Zeichnungen näher erläutert. Es zeigt:

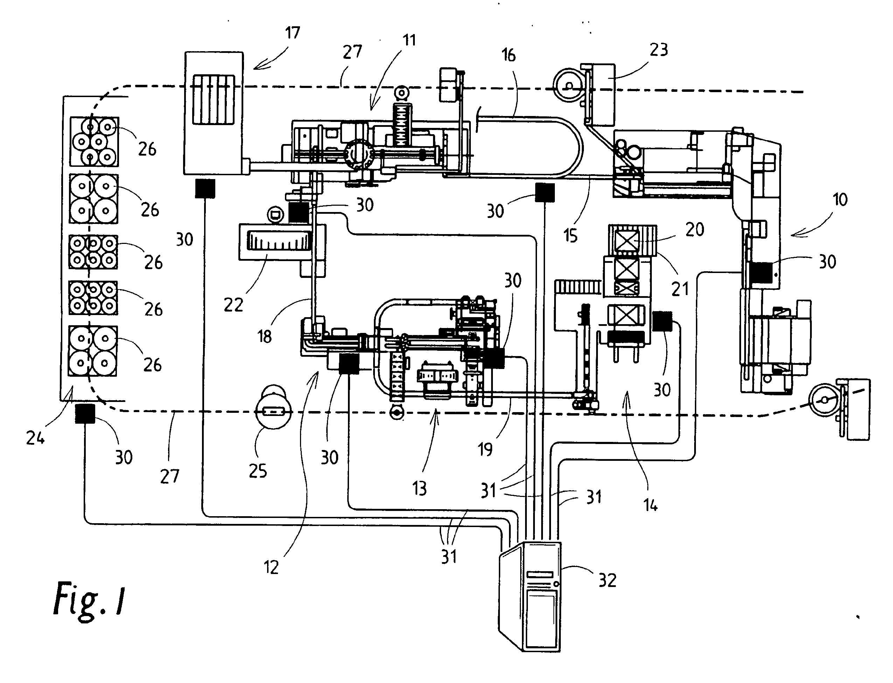

Fig. 1 eine Fertigungs- und Verpackungsanlage für Zigaretten im schematischen Grundriss,
Fig. 2 eine schematische Darstellung zwei an ein Kommunikationsmedium, einen Bus, angeschlossener Kommunikationsteilnehmer, nämlich einer Steuerung und eines entfernten Speichers,
Fig. 3 ein Flussdiagramm zu einzelnen Verfahrensschritten beim Anlaufen oder Wiederanlaufen der Steuerung und
Fig. 4 ein Flussdiagramm zu einzelnen Verfahrensschritten beim Ausführen eines Steuerungsprogramms.

Das in den Zeichnungen dargestellte Ausführungsbeispiel betrifft eine Fertigungs- und Verpackungsanlage für Zigaretten, also eine sogenannte Linie. Diese umfasst Fertigungseinheiten, beispielsweise eine Zigarettenherstellmaschine, nämlich einen Maker 10, eine an diese anschließende Verpackungsmaschine, einen Packer 11, eine nachfolgende Folieneinschlagmaschine 12, eine Verpackungsmaschine zum Herstellen Gebinden aus mehreren Zigarettenpackungen, also einen Stangenpacker 13 und einen Kartonierer 14, der Packungsgebinde, also Zigarettenstangen, in einen Versandkarton verpackt. Vom Maker 10 gefertigte Zigaretten werden von einem Zigarettenförderer 15 mit einem zugeordneten Zigarettenspeicher 16 dem Packer 11 zum Fertigen von Klappschachteln zugeführt. Dem Packer 11 ist ein Zuschnittspeicher 17 zugeordnet, also eine Einrichtung zur Aufnahme eines größeren Vorrats an vorgefertigten Zuschnitten für die Klappschachteln. Die durch den Packer 11 gefertigten Zigarettenpackungen werden über einen Packungsförderer 18 der Folieneinschlagmaschine 12 zugeführt. Diese hat die Aufgabe, die Zigarettenpackungen in einen Folien- oder Kunststoffzuschnitt einzuhüllen. Aus den fertiggestellten Zigarettenpackungen werden Packungsgruppen gebildet, die im Bereich des Stangenpackers 13 mit einer Gebindeumhüllung versehen werden und somit eine Zigarettenstange aus üblicherweise zehn Zigarettenpackungen ergeben. Diese Zigarettenstangen werden durch einen Stangenförderer 19 dem Kartonierer 14 zugeführt. Dieser übergibt fertige Versandkartons mit einer Mehrzahl von Zigarettenstangen an einen Abförderer 21. Im Bereich des Packungsförderers 18 zwischen Packer 11 und Folieneinschlagmaschine 12 befindet sich ein Packungsspeicher 22 für die Aufnahme einer größeren Anzahl von Zigarettenpackungen. Dem Maker 10 ist eine Filteransetzmaschine 23 zugeordnet. Die beschriebenen Fertigungseinheiten müssen mit Material versorgt werden. Dazu ist ein Materiallager 24 vorgesehen, aus dem mittels eines Materialförderers 25 Material, insbesondere in Form von gewickelten Bahnen, nämlich Bobinen 26, entnehmbar und den einzelnen Fertigungseinheiten zuführbar ist. Dazu ist der Materialförderer 25 entlang eines Förderbandes 27 beweglich.

Den einzelnen Fertigungseinheiten, nämlich Maker 10, Packer 11, Folieneinschlagmaschine 12, Stangenpacker 13, Kartonierer 14, Zigarettenförderer 15 und Zigarettenspeicher 16 sowie dem Zuschnittspeicher 17 sind Steuerungen 30 zugeordnet, die ein Steuerprogramm 31 ausführen. Auch dem Lager 24 und dem Materialförderer 25 ist eine eigene Steuerung 30 zugeordnet. Die Steuerungen 30 sind untereinander sowie mit einem entfernten Speicher 32 über einen Bus 34, insbesondere einen Feldbus, kommunikativ verbunden.

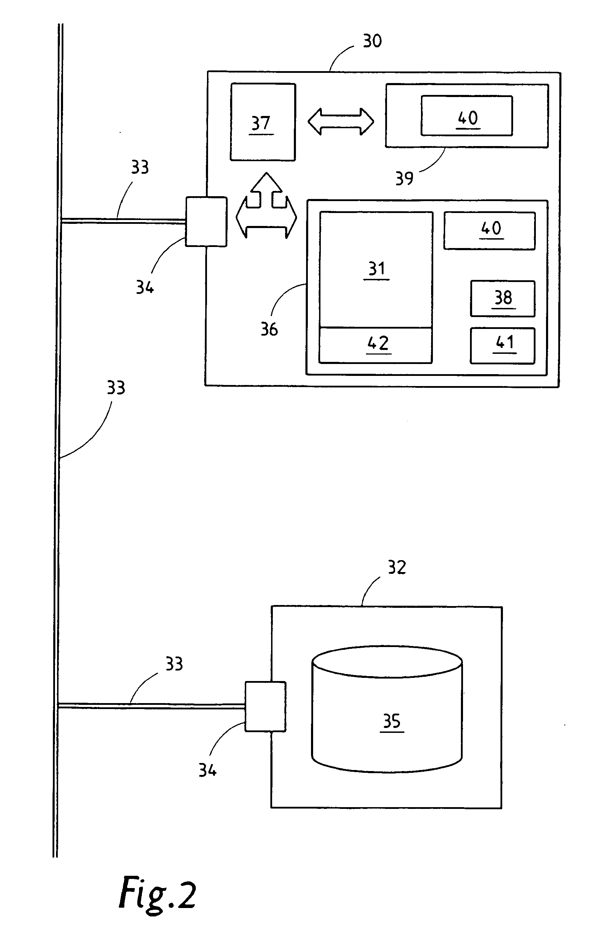

Fig. 2 zeigt schematisch eine der Steuerungen 30, die über eine Schnittstelle 34, also einer Busschnittstelle, an den Bus 33 angeschlossen ist. Gleichfalls an den Bus 33 ist der entfernte Speicher 32 angeschlossen und zwar über eine eigene Schnittstelle 34. Der entfernte Speicher 32 weist einen Speicher 35, wie z.B. eine Festplatte oder dergleichen auf. Jede Steuerung 30 weist in an sich bekannter Weise einen Hauptspeicher 36 auf. Dieser ist üblicherweise als frei zugreifbarer Speicher (random access memory - RAM) ausgeführt. In dem Hauptspeicher 36 ist das Steuerungsprogramm 31 abgespeichert. Das Steuerungsprogramm 31 umfasst, als Programmanweisungen codiert, Anweisungen zur Steuerung und/oder Beeinflussung der jeweils gesteuerten Fertigungseinheit oder einzelner Organe, etwa Motoren, Ventile oder dergleichen, dieser Fertigungseinheit. Das Steuerungsprogramm 31 wird in an sich bekannter Weise von einer dafür vorgesehenen Vorrichtung der Steuerung 30, beispielsweise einem Mikroprozessor 37 ausgeführt. Im Hauptspeicher 36 ist auch ein Betriebssystem 38 abgespeichert, das grundlegende Funktionen, z.B. die Bedienung der Schnittstelle 34, beinhaltet und auf das bei Ausführung des Steuerungsprogramms 31 zugegriffen wird. Bei besonderen Steuerungen kann die Funktionalität des Betriebssystems vollständig im Steuerungsprogramm 31 enthalten sein. Dann ist kein separates Betriebssystem 38 im Hauptspeicher 36 erforderlich. Neben dem Hauptspeicher 36 ist der Steuerung 30 ein Speichermodul 39 zugeordnet. In dem Speichermodul 39 sind Konfigurationsdaten 40 abgelegt. Im Hauptspeicher 36 ist ein Urlader 41 abgespeichert. Der Urlader 41 wird bei Wiederanlaufen der Steuerung, also beim erstmaligen Anschalten der Steuerung 30 oder bei Spannungswiederkehr ausgeführt. Der Urlader 41 setzt die Steuerung 30 beim Wiederanlauf auf definierte Verhältnisse zurück. Weiterhin startet der Urlader 41 ein Anwenderprogramm. Im Falle eines vorhandenen Steuerungsprogramms 31 startet der Urlader 41 damit das Steuerungsprogramm 31. Bei einer neuen Steuerung 30, die z.B. im Servicefall gegen eine defekte Steuerung 30 ausgetauscht wird, ist zunächst noch kein Steuerungsprogramm 31 vorhanden. Im Hauptspeicher 36 ist stattdessen ein Installationsprogramm 42 vorhanden. Beim Anschalten einer solchen neuen Steuerung 30 startet der Urlader 41 das Installationsprogramm 42.

Nachfolgend wird die Funktionalität des Installationsprogramms 42 sowie die Verwendung der Konfigurationsdaten 40 erläutert. Eine neue Steuerung 30 umfasst, wie bereits ausgeführt, kein Steuerungsprogramm 31. D.h. eine solche neue Steuerung 30 ist nicht unmittelbar zur Steuerung und/oder Überwachung bestimmter Funktionseinheiten einsatzbereit. Bisher war hier eine aufwendige Neukonfiguration der Steuerung 30 erforderlich. Mit der Erfindung wird dies nun vermieden. Das vom Urlader 41 aufgerufene Installationsprogramm 42 bewirkt automatisch eine Konfiguration der neuen Steuerung 30 derart, dass die neue Steuerung 30 über sämtliche Daten verfügt, auf die auch eine ausgefallene Steuerung 30, die durch die neue Steuerung 30 ersetzt wird, Zugriff hatte. Das Installationsprogramm 42 greift zur Konfiguration der neuen Steuerung 30 zunächst auf die Konfigurationsdaten 40 im Speichermodul 39 zu. Diese Konfigurationsdaten 40 umfassen zumindest eine eindeutige Adresse der Steuerung am Bus 33. Diese Adresse wird der Schnittstelle 34 übermittelt, so dass die neue Steuerung 30 Daten über den Bus 33 senden und empfangen kann. Des Weiteren umfassen die Konfigurationsdaten 40 Speicherortdaten hinsichtlich eines Speicherortes einer Kopie des Steuerungsprogramms 31. Anhand der Speicherortdaten greift die Steuerung 30 unter Kontrolle des Installationsprogramms 42 auf den Speicherort der Kopie des Steuerungsprogramms 31, insbesondere der letzten oder aktuellsten Kopie, zu, also z.B. auf den Speicher 35 des entfernten Speichers 32. Bei diesem Zugriff erfolgt ein Transfer der Kopie des Steuerungsprogramms 31 in den Hauptspeicher 36 der neuen Steuerung 30. Beim Transfer der Kopie des Steuerungsprogramms 31 in den Hauptspeicher 36 wird entweder das Installationsprogramm 42 oder ein Verweis zum Aufruf des Installationsprogramms 42 überschrieben, derart, dass bei einem nächsten Wiederanlauf der Steuerung 30 der Urlader 41 das Steuerungsprogramm 31 ausführt.

Im Betrieb der Steuerung 30 wird entweder unter Kontrolle des Steuerungsprogramms 31 oder des Betriebssystems 38 zu vorgegebenen oder vorgebbaren Zeitpunkten, insbesondere in äquidistanten Zeitabschnitten ein Kopie des Steuerungsprogramms 31 außerhalb der Steuerung 30, also vorzugsweise auf einem externen Speicher 32, gegebenenfalls aber auch in einem Hauptspeicher 36 einer weiteren Steuerung 30 abgespeichert. Der Speicherort dieser Kopie des Steuerungsprogramms 31 wird den Konfigurationsdaten 40 hinzugefügt, um einen späteren Zugriff auf die Kopie des Steuerungsprogramms zu ermöglichen. Der Begriff Steuerungsprogramm 31 umfasst im Zusammenhang mit der vorliegenden Erfindung nicht nur die eigentlichen Programmanweisungen, sondern auch die vom Steuerungsprogramm be- oder verarbeiteten Daten, also z.B. Eingangsdaten, Ausgangsdaten sowie z.B. Registerinhalte oder Daten für Zwischen- oder Teilergebnisse, sogenannte Merker. Im Falle eines Ausfalls einer Steuerung 30 kann diese gegen eine neue Steuerung 30 ausgetauscht werden, welche unter Kontrolle des Installationsprogramms 42 nach einer Kopie des Steuerungsprogramms 31 sucht und dieses in den Hauptspeicher 36 der neuen Steuerung 30 transferiert. Nach diesem Transfer kann die neue Steuerung 30 die Funktionalität der ausgefallenen Steuerung 30 übernehmen. Ein derartiger Steuerungstausch lässt sich besonders vor dem Hintergrund, dass die Steuerungen häufig in einem Modulträger (nicht dargestellt) gehalten sind, in wenigen Augenblicken bewerkstelligen. Stillstandszeiten der gesteuerten technischen Anlage sind damit auch im Servicefall auf ein Minimum reduziert. Um die Sicherheit noch weiter zu erhöhen, kann vorgesehen sein, dass mehrere Kopien von Steuerungsprogrammen 31 auf den über den Bus 33 erreichbaren Kommunikationsteilnehmern, also anderen Steuerungen 30 oder einem oder mehreren entfernten Speichern 32 hinterlegt werden. Dann ist eine automatische Konfiguration einer ausgefallenen Steuerung 30 selbst dann nach möglich, wenn neben der Steuerung 30 z.B. auch der zentrale Speicher 32, auf dem eine Kopie des Steuerungsprogramms 31 gespeichert ist, ausfällt. In einem solchen Fall greift das Installationsprogramm 42 der neuen Steuerung nämlich auf den Speicherort einer älteren Kopie des Steuerungsprogramms 31 zurück. Zu diesem Zweck umfassen die Konfigurationsdaten 40 eine Liste von Speicherortdaten hinsichtlich eines Speicherortes der jeweiligen Kopie des Steuerungsprogramms. Dabei kann entweder das letzte Element einer solchen Liste von Speicherortdaten den Speicherort der letzten Kopie des Steuerungsprogramms angeben, oder es ist vorgesehen, dass die Speicherortdaten zusätzlich eine Zeitinformation umfassen, so dass anhand der Zeitinformation die aktuellste erreichbare Kopie des Steuerungsprogramms 31 ermittelbar ist.

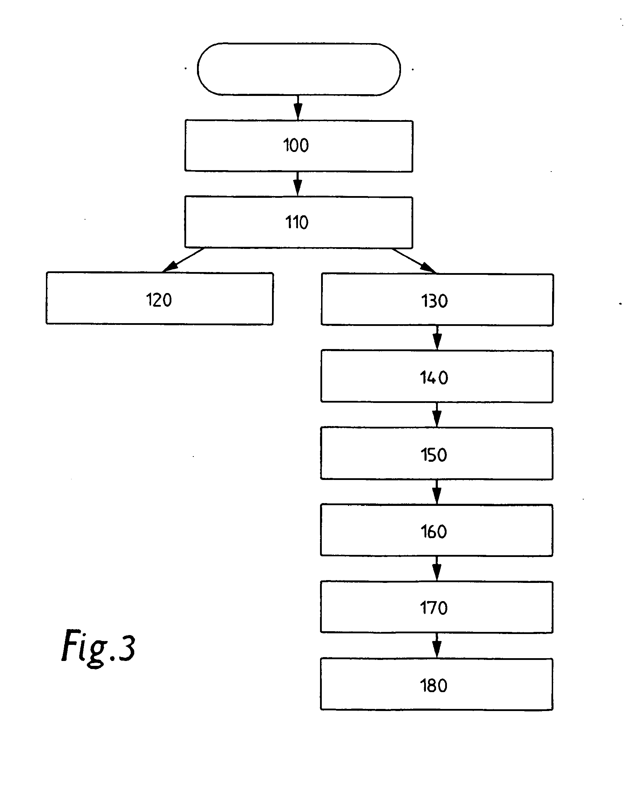

Fig. 3 zeigt den Ablauf des Verfahrens in einem Flussdiagramm. Beim Anlaufen oder Wiederanlaufen der Steuerung 30, also beim Einschalten oder bei Wiederkehr der Versorgungsspannung wird zunächst der Urlader 41 gestartet (Schritt 100). Der Urlader führt in an sich bekannter Weise bestimmte Minimalinitialisierungen in Bezug auf die Hardware der Steuerung 30 durch. Im Anschluss daran veranlasst der Urlader die Ausführung einer Software, die im Hauptspeicher 36 entweder ab einer bestimmten Speicherzelle beginnt (Startadresse), oder deren Startadresse in einer bestimmten Speicherzelle hinterlegt ist (Schritt 110). Handelt es sich bei der auf diese Weise aufgerufenen Software um das Steuerungsprogramm 31, wird das Steuerungsprogramm 31 ausgeführt (Schritt 120). Während der Ausführung des Steuerungsprogramms 31 erfolgt zu vorgegebenen oder vorgebbaren Zeitpunkten, insbesondere zu äquidistanten Zeitpunkten, ein Anlegen einer Kopie des Steuerungsprogramms 31 in einem über den Bus 33 erreichbaren Speicher, also z.B. dem entfernten Speicher 32 oder im Hauptspeicher 36 einer anderen Steuerung 30. Der Speicherort, also die Adresse dieser Kopie des Steuerungsprogramms 31 wird zu den Konfigurationsdaten 40 hinzugefügt. Gleichfalls während der Ausführung des Steuerungsprogramms erfolgt eine kontinuierliche Aktualisierung wichtiger Konfigurationsdaten 40 in einem dafür vorgesehenen Speicher, also z.B. dem Speichermodul 39.

Handelt es sich bei der durch den Urlader 41 aufgerufenen Software dagegen um das Installationsprogramm 42, wird dieses gestartet (Schritt 130). Das Installationsprogramm 42 greift auf das Speichermodul 39 zu und liest die dort gespeicherten Konfigurationsdaten 40 aus (Schritt 140). Die Konfigurationsdaten 40 umfassen die Adresse der Steuerung 30 am Bus 33. Das Installationsprogramm 42 konfiguriert die Steuerung 30 entsprechend der ausgelesenen Bus-Adresse, so dass die Steuerung 30 am Datenverkehr über den Bus 33 teilnehmen kann (Schritt 150). Die Konfigurationsdaten 40 umfassen weiter den Speicherort einer Kopie des Steuerungsprogramms 31. Das Installationsprogramm 42 greift auf den Speicherort, also zunächst den entfernten Speicher 32 oder die betreffende Steuerung 30 und sodann auf den lokalen Speicherort, also z.B. eine mit einem Dateinahmen spezifizierte Datei in einem Verzeichnisbaum oder einen mit Start- und Endadresse spezifizierten Abschnitt eines Speichers, zu und veranlasst einen Transfer der ausgewählten Kopie des Steuerungsprogramms 31 in den Hauptspeicher 36 der Steuerung 30 (Schritt 160). Beim Transfer der Steuerungsprogramms 31 in den Hauptspeicher 36 wird das Installationsprogramm 42 durch das Steuerungsprogramm 31 überschrieben, derart, dass das Steuerungsprogramm 31 im Hauptspeicher 36 an der gleichen Speicherstelle beginnt, an der zuvor das Installationsprogramm 42 gespeichert war. Alternativ kann auch vorgesehen sein, dass eine Speicherstelle, die zuvor die Startadresse des Installationsprogramms 42 enthalten hatte, mit der Startadresse des Steuerungsprogramms 31 überschrieben wird (Schritt 170). Abschließend wird ein Neustart der Steuerung 30 ausgelöst. Dies kann automatisch erfolgen (Schritt 180). Wenn ein automatischer Neustart der Steuerung 30 nicht möglich ist, wird der Abschluss des Transfers des Steuerungsprogramms 31 einem Benutzer optisch oder akustisch angezeigt, so dass dieser darauf einen Neustart der Steuerung 30 manuell, etwa durch Abschalten und Wiederanschalten der Netzspannung veranlasst.

Bei Wiederkehr der Versorgungsspannung wird dann wieder der Urlader 41 gestartet (Schritt 100), der einen Aufruf des jetzt auf der Steuerung 30 vorhandenen Steuerungsprogramms 31 veranlasst (Schritt 110).

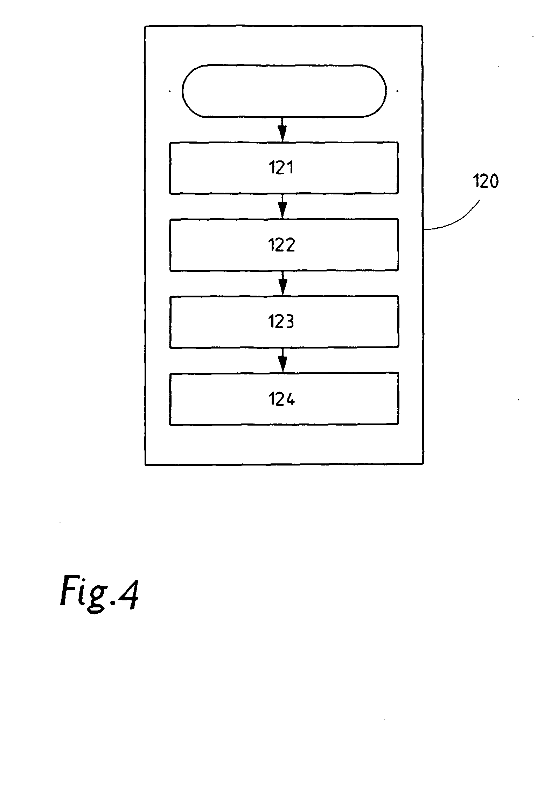

Die Ausführung des Steuerungsprogramms 31 (Schritt 120) wird nachfolgend anhand von Fig. 4 erläutert. Beim Start des Steuerungsprogramms 31 erfolgt in an sich bekannter Weise eine übliche Initialisierung, also z.B. eine Initialisierung von im Steuerungsprogramm 31 verwendeten Daten und Variablen auf vorgegebene oder vorgebbare Werte (Schritt 121). Danach werden aus den Konfigurationsdaten 40 Maschinendaten, hinsichtlich einer Maschine, also einer Fertigungseinheit, wie Maker 10, Packer 11 oder dergleichen, für die das Steuerungsprogramm 31 vorgesehen ist, ausgelesen. Des Weiteren werden von der angeschlossenen Maschine, also derjenigen Fertigungseinheit, der die Steuerung 30 zugeordnet ist, Maschinenkennungen ausgelesen (Schritt 122). Anschlieβend erfolgt ein Vergleich der ausgelesenen Daten (Schritt 123). Die Ausführung des Steuerungsprogramms 31 wird abgebrochen, z.B. mit einer geeigneten Fehler- oder Statusmeldung, wenn die Maschinendaten und die Maschinenkennungen nicht zueinander passen (Schritt 124). Maschinendaten und die Maschinenkennungen passen zusammen, wenn sie identisch sind oder im Hinblick auf bestimmte Positionen übereinstimmen. Bei den Maschinendaten und den Maschinenkennungen handelt es sich z.B. um eine Seriennummer, eine Typenbezeichnung, eine Kombination von beiden oder Teilen derselben oder dergleichen handeln.

Die ausgelesenen Maschinendaten werden zusammen mit weiteren wichtigen Daten die zum Betrieb der Steuerung erforderlich sind (Konfigurationsdaten 40) unter Kontrolle des Steuerungsprogramms 31 im Speichermodul 39 gespeichert.

Bei dem Speichermodul 39 handelt es sich insbesondere um ein von der Steuerung 30 lösbares Speichermodul 39, das also im Falle eines erforderlichen Austausches einer Steuerung 30 zunächst aus der auszutauschenden Steuerung 30 entfernt wird und nach Montage einer neuen Steuerung 30 in die neue Steuerung 30 eingeführt wird. Das Speichermodul 39 ist im Bereich eines Montageortes der Steuerung 30, also an einem Schaltschrank, Schaltkasten oder Schaltpult oder an einem Modulträger zur Aufnahme einer Steuerung 30 (sämtlich nicht dargestellt), beweglich fixiert, z.B. mittels einer Kette oder dergleichen. Auf diese Weise ist sichergestellt, dass das Speichermodul 39 nicht verloren geht und dass das Speichermodul 39 nur in eine Steuerung 30 einführbar ist, die am Montageort im Bereich der Beweglichkeit des Speichermoduls 39 montiert wird.

### Bezugszeichenliste:

- 10: Maker
- 11: Packer
- 12: Folieneinschlagmaschine
- 13: Stangenpacker
- 14: Kartonierer
- 15: Zigarettenförderer
- 16: Zuschnittspeicher
- 17: Zuschnittspeicher
- 18: Packungsförderer
- 19: Stangenförderer
- 20:
- 21: Abförderer
- 22: Packungsspeicher
- 23: Filteransetzmaschine
- 24: Materiallager
- 25: Materialförderer
- 26: Bobine
- 27: Förderband
- 28:
- 29:
- 30: Steuerung
- 31: Steuerprogramm
- 32: entfernter Speicher
- 33: Bus
- 34: Schnittstelle
- 35: Speicher
- 36: Hauptspeicher
- 37: Mikroprozessor
- 38: Betriebssystem
- 39: Speichermodul
- 40: Konfigurationsdaten
- 41: Urlader
- 42: Installationsprogramm

## Patentansprüche

1. Verfahren zum Betrieb einer Vorrichtung zur Steuerung und/oder Überwachung einer Produktions- und/oder Verpackungsanlage, insbesondere einer Anlage zur Produktion und/oder Verpackung von Zigaretten, Zigarren und dergleichen, - Steuerung (30) - an einem Kommunikationsmedium, insbesondere einem Bus (33), wobei die Steuerung (30) eine Schnittstelle (34) zum Anschluss an das Kommunikationsmedium, einen Hauptspeicher (36) zum Ablegen eines Steuerprogramms (31) sowie Mittel zum Ausführen des Steuerprogramms (31) umfasst, **dadurch gekennzeichnet, dass** in einem entfernbaren Speichermodul (39) Konfigurationsdaten (40) abgelegt sind, dass bei einem Wiederanlauf der Steuerung (30) die Konfigurationsdaten (40) ausgelesen werden und dass anhand der Konfigurationsdaten (40) ein Zugriff auf einen über das Kommunikationsmedium erreichbaren entfernten Speicher (32) erfolgt, der einen Transfer von auf dem entfernten Speicher (32) hinterlegten Daten auf die Steuerung (30) umfasst.

2. Verfahren nach Anspruch 1, **dadurch gekennzeichnet, dass** die Konfigurationsdaten (40) eine eindeutige Adresse der Steuerung (30) an dem Kommunikationsmedium umfassen und dass bei einem Wiederanlauf der Steuerung (30) die Schnittstelle (34) mit der Adresse konfiguriert wird.

3. Verfahren nach Anspruch 2, **dadurch gekennzeichnet, dass** im Hauptspeicher (36) der Steuerung (30) ein Installationsprogramm (42) gespeichert ist, das bei Wiederanlauf der Steuerung (30) ausgeführt wird, dass das Ausführen des Installationsprogramms (42) einen Zugriff auf die Konfigurationsdaten (40) umfasst, dass anhand der Konfigurationsdaten (40) ein Zugriff auf den über das Kommunikationsmedium erreichbaren entfernten Speicher (32) erfolgt und dass dieser Zugriff einen Transfer der auf dem entfernten Speicher (32) hinterlegten Kopie des Steuerungsprogramms (31) in den Hauptspeicher (36) der Steuerung (30) umfasst.

4. Verfahren nach Anspruch 3, **dadurch gekennzeichnet, dass** beim Transfer der Kopie des Steuerungsprogramms (31) in den Hauptspeicher (36) der Steuerung (30) ein Verweis zum Aufruf des Installationsprogramms (42) durch einen Verweis zum Aufruf des Steuerungsprogramms (31) überschrieben wird.

5. Verfahren nach Anspruch 3 oder 4, **dadurch gekennzeichnet, dass** beim Transfer der Kopie des Steuerungsprogramms (31) in den Hauptspeicher (36) der Steuerung (30) das Installationsprogramm (42) im Hauptspeicher (36) überschrieben wird.

6. Verfahren nach Anspruch 3, **dadurch gekennzeichnet, dass** die Konfigurationsdaten (40) Speicherortdaten hinsichtlich eines Speicherortes der Kopie des Steuerungsprogramms (31), insbesondere hinsichtlich des Speicherortes der letzten Kopie des Steuerungsprogramms (31), umfassen.

7. Verfahren nach Anspruch 6, **dadurch gekennzeichnet, dass** der Transfer der Kopie des Steuerungsprogramms (31) in den Hauptspeicher (36) der Steuerung (30) anhand der Speicherortdaten vom letzten Speicherort erfolgt.

8. Verfahren nach einem der vorangehenden Ansprüche, **dadurch gekennzeichnet, dass** die Konfigurationsdaten (40) Maschinendaten hinsichtlich einer Maschine, für die das Steuerungsprogramm (31) vorgesehen ist, umfassen und dass beim Wiederanlaufen der Steuerung (30) vor oder mit dem Start des Steuerungsprogramms (31) ein Vergleich der Maschinendaten mit von der gesteuerten und/oder überwachten Produktions- und/oder Verpackungsanlage eingelesenen Maschinenkennungen erfolgt und dass das Steuerungsprogramm (31) nur bei zu den Maschinendaten passenden Maschinenkennungen ausgeführt wird.

9. Vorrichtung zur Steuerung und/oder Überwachung einer Produktions- und/oder Verpackungsanlage, insbesondere einer Anlage zur Produktion und/oder Verpackung von Zigaretten, Zigarren und dergleichen, - Steuerung (30) - zur Durchführung des Verfahrens nach einem der vorangehenden Ansprüche, mit einem Hauptspeicher (36), in dem ein Steuerprogramm (31) ablegbar ist, einer Vorrichtung zur Ausführung des Steuerprogramms (31) und einer Schnittstelle (34) zum Anschluss an ein Kommunikationsmedium, insbesondere einen Bus (33), **dadurch gekennzeichnet, dass** in einem entfernbaren Speichermodul (39) Konfigurationsdaten (40) abgelegt sind, die bei einem Wiederanlauf der Steuerung (30) auslesbar und auswertbar sind, wobei das Speichermodul (39) an einem Montageort der Steuerung (30) insbesondere mittels einer Kette oder dergleichen beweglich fixiert ist.

## Claims

1. Method of operating a device for controlling and/or monitoring a production and/or packaging installation, in particular an installation for the production and/or packaging of cigarettes, cigars and the like - controller (30) - on a communication medium, in particular a bus (33), the controller (13) comprising an interface (34) to be connected to the communication medium, a main memory (36) for the storage of a control program (31) and also means for executing the control program (31), **characterized in that** configuration data (40) are stored in a removable memory module (39), **in that**, when the controller (30) is restarted, the configuration data (40) are read out and **in that**, by using the configuration data (40), an access to a remote memory (32) which can be reached via the communication medium is made, which comprises a transfer to the controller (30) of data stored in the remote memory (32).

2. Method according to Claim 1, **characterized in that** the configuration data (40) comprise a unique address of the controller (30) on the communication medium, and **in that**, when the controller (30) is restarted, the interface (34) is configured with the address.

3. Method according to Claim 2, **characterized in that** in the main memory (36) of the controller (30) there is stored an installation program (42) which is executed when the controller (30) is restarted, **in that** the execution of the installation program (42) comprises an access to the configuration data (40), **in that** by using the configuration data (40) an access is made to the remote memory (32) which can be reached via the communication medium, and **in that** this access comprises a transfer of the copy of the control program (31) stored in the remote memory (32) into the main memory (36) of the controller (30).

4. Method according to Claim 3, **characterized in that**, during the transfer of the copy of the control program (31) into the main memory (36) of the controller (30), a reference to calling the installation program (42) is overwritten by a reference to calling the control program (31).

5. Method according to Claim 3 or 4, **characterized in that**, during the transfer of the copy of the control program (31) into the main memory (36) of the controller (30), the installation program (42) in the main memory (36) is overwritten.

6. Method according to Claim 3, **characterized in that** the configuration data (40) comprise memory location data with regard to a memory location of the copy of the control program (31), in particular with regard to the memory location of a last copy of the control program (31).

7. Method according to Claim 6, **characterized in that** the transfer of the copy of the control program (31) into the main memory (36) of the controller (30) is carried out by using the memory location data from the last memory location.

8. Method according to one of the preceding claims, **characterized in that** the configuration data (40) comprise machine data with regard to a machine for which the control program (31) is provided, and that, when the controller (30) is restarted, before or with the start of the control program (31), a comparison is made between the machine data and machines codes read in from the controlled and/or monitored production and/or packaging installation, and **in that** the control program (31) is executed only when the machine codes match the machine data.

9. Device for controlling and/or monitoring a production and/or packaging installation, in particular an installation for the production and/or packaging of cigarettes, cigars and the like - controller (30) - for implementing the method according to one of the preceding claims, comprising a main memory (36), in which a control program (31) can be stored, a device for executing the control program (31) and an interface (34) for connection to a communication medium, in particular a bus (33), **characterized in that** configuration data (40), which can be read out and evaluated when the controller (30) is restarted, are stored in a removable memory module (39), the memory module (39) being fixed at an installation location of the controller (30) such that it can move, in particular by means of a chain or the like.

## Revendications

1. Procédé pour le fonctionnement d'un dispositif de commande et/ou de surveillance d'une installation de production et/ou d'emballage, en particulier d'une installation pour la production et/ou l'emballage de cigarettes, cigares et similaires, - commande (30) - sur un support de communication, en particulier sur un bus (33), la commande (30) présentant une interface (34) pour le raccordement au support de communication, une mémoire principale (36) pour le dépôt d'un programme de commande (31) ainsi que des moyens pour l'exécution du programme de commande (31), **caractérisé en ce que** dans un module de mémoire amovible (39) sont déposées des données de configuration (40), **en ce que** lors d'un redémarrage de la commande (30), les données de configuration (40) sont lues et **en ce qu'**à l'aide des données de configuration (40), il est effectué un accès à une mémoire distante (32) accessible par le support de communication, accès qui comprend un transfert des données déposées dans la mémoire distante (32) à la commande (30).

2. Procédé selon la revendication 1, **caractérisé en ce que** les donnnées de configuration (40) comprennent une adresse univoque de la commande (30) sur le support de communication et **en ce que** lors d'un redémarrage de la commande (30), l'interface (34) est configurée avec l'adresse.

3. Procédé selon la revendication 2, **caractérisé en ce que** dans la mémoire principale (36) de la commande (30) est stocké un programme d'installation (42) qui est exécuté lors du redémarrage de la commande (30), **en ce que** l'exécution du programme d'installation (42) comporte un accès aux données de configuration (40), **en ce qu'**à l'aide des données de configuration (40), il se produit un accès à la mémoire distante (32) accessible par le support de communication et **en ce que** cet accès comporte un transfert de la copie du programme de commande (31), déposée sur la mémoire distante (32), dans la mémoire principale (36) de la commande (30).

4. Procédé selon la revendication 3, **caractérisé en ce que** lors du transfert de la copie du programme de commande (31) dans la mémoire principale (36) de la commande (30), une référence d'appel de programme d'installation (42) est écrasée par une référence d'appel du programme de commande (31).

5. Procédé selon la revendication 3 ou 4, **caractérisé en ce que** lors du transfert de la copie du programme de commande (31) dans la mémoire principale (36) de la commande (30), le programme d'installation (42) est écrasé dans la mémoire principale (36).

6. Procédé selon la revendication 3, **caractérisé en ce que** les données de configuration (40) comprennent des données d'emplacement de mémoire concernant un emplacement de mémoire de la copie du programme de commande (31), en particulier concernant l'emplacement de mémoire de la dernière copie du programme de commande (31).

7. Procédé selon la revendication 6, **caractérisé en ce que** le transfert de la copie du programme de commande (31) s'effectue dans la mémoire principale (36) de la commande (30) à l'aide des données d'emplacement de mémoire du dernier emplacement de mémoire.

8. Procédé selon l'une des revendications précédentes, **caractérisé en ce que** les données de configuration (40) comprennent des données de machine concernant une machine pour laquelle est prévu le programme de commande (31), et **en ce que** lors du redémarrage de la commande (30) avant ou au moment du lancement du programme de commande (31), il s'effectue une comparaison des données de machine avec les caractéristiques de machine lues par l'installation d'emballage et/ou de production commandée et/ou surveillée et **en ce que** le programme de commande (31) n'est exécuté qu'en cas de caractéristiques de machine correspondant aux données de machine.

9. Procédé pour le fonctionnement d'un dispositif de commande et/ou de surveillance d'une installation de production et/ou d'emballage, en particulier d'une installation pour la production et/ou l'emballage de cigarettes, cigares et similaires, - commande (30) - pour la mise en oeuvre du procédé selon l'une des revendications précédentes, comprenant une mémoire principale (36) dans laquelle peut être déposé un programme de commande (31), un dispositif pour l'exécution du programme de commande (31) et une interface (34) pour la connexion à un support de communication, en particulier un bus (33), **caractérisé en ce que** dans un module de mémoire amovible (39) sont déposées des données de configuration (40) qui sont lisibles et analysables lors d'un redémarrage de la commande (30), le module de mémoire (3) étant fixé de manière mobile sur un lieu de montage de la commande (30) en particulier au moyen d'une chaîne ou similaire.
